# EUROPEAN PATENT APPLICATION

(11) **EP 3 919 572 A1**
(43) Date of publication of application: **08.12.2021**
(21) Application number: 20177986.5
(22) Date of filing: 03.06.2020
(51) Int. Cl.: C09D 5/03

(54) **POWDER COATING COMPOSITION AND SUBSTRATE COATED WITH SUCH POWDER COATING COMPOSITION**

(71) Applicant: Akzo Nobel Coatings International B.V., 1077 WW Amsterdam (NL)
(72) Inventor: KITTLE, Kevin Jeffrey, 6824 BM Arnhem (NL); GONZALEZ ALVAREZ, Maria Jose, 6824 BM Arnhem (NL); DONOGHUE, Andrew, 6824 BM Arnhem (NL)
(74) Representative: Akzo Nobel IP Department

(57) **Abstract**

The invention relates to a powder coating composition comprising a curing system comprising a curable resin and one or more curing additives for curing the curable resin, wherein the powder coating composition comprises:
- two or more powder coating components with different contents of curable resin and/or at least one of the one or more curing additives;
- in the range of from 0.1 to 25 wt% of a dry-blended inorganic particulate additive C consisting of inorganic components i), ii), and iii), wherein component i) is non-coated aluminium oxide or non-coated silica, component ii) is aluminium hydroxide and/or aluminium oxyhydroxide, and component iii) is silica; and
- optionally up to 35 wt% of a further dry-blended inorganic particulate additive D,
wherein the total wt% of dry-blended inorganic particulate additives C and D is at most 40 wt%, wherein powder coating components A and B and any further powder coating component have a particle size distribution with a Dᵥ90 of at most 50 µm and a Dᵥ50 of at most 30 µm, and wherein for any combination of two powder coating components the ratio of the Dᵥ50 of one of the powder components to the Dᵥ50 of the other one of the powder coating components is in the range of from 0.8 to 1.2.

## Description

### Field of the Invention

The present invention relates to a powder coating composition comprising a curing system comprising a curable resin and one or more curing additives for curing the curable resin, and to a substrate coated with such powder coating composition.

### Background of the Invention

Powder coating compositions are solid compositions that generally comprise a solid film-forming or binder polymer or mixtures of different solid film-forming polymers, usually with one or more pigments and, optionally, extenders and one or more performance additives such as plasticizers, stabilizers, degassing agents, and flow aids. The film-forming polymers are usually thermosetting polymers that cure upon heating, typically in the presence of a crosslinking agent, which may itself be a polymer. Generally, the polymers have a glass transition temperature (Tg), softening point or melting point above 30 °C.

Conventionally, the manufacture of a powder coating composition comprises melt-mixing the components of the composition. Melt-mixing involves high speed, high intensity mixing of dry ingredients followed by heating of the mixture to a temperature above the softening temperature of the uncured polymer, but below the curing temperature, in a continuous compounder such as a single or twinscrew extruder to form a molten mixture. The extruded molten mixture is rolled into the shape of a sheet, cooled to solidify the mixture, and subsequently crushed to flakes and subsequently pulverized to a fine powder. Generally, the powder is then subjected to a sequence of particle sizing and separation operations, such as grinding, classifying, sifting, screening, cyclone separation, sieving and filtering.

The thus-obtained powder coating composition is then applied to a substrate and heated to melt and fuse the particles and to cure the coating. Powder coating compositions may be applied by fluidized-bed processes wherein the substrate is preheated and dipped in a fluidized bed of the powder resulting in the powder fusing on contact with hot surface and adhering to the substrate, by electrostatic fluidized-bed processes, or by electrostatic spray processes wherein the powder coating particles are electrostatically charged by electrodes within a fluidized bed or by an electrostatic spray gun and directed to be deposited onto an earthed substrate.

Powder coating compositions are generally formulated as so-called one-component compositions, i.e. by melt-mixing all ingredients such as curable resins, curing additives (such as crosslinking agents, catalysts, thermal radical intiators and/or photoinitiators), and any pigments, extenders, and performance additives in an extruder and then pulverizing and milling the solidified extruded mixture into a single powder coating composition. It is widely believed that melt-mixing of all ingredients together results in improved uniformity of the composition and in the necessary proximity of the ingredients, in particular curable resins and curing additives, to achieve good coalescence during curing and satisfactory coating properties, in particular surface appearance.

Two-component powder coating compositions are known in the art. Such compositions have been proposed for powder coating compositions that cure at a relatively low temperature. For low-temperature-curing compositions, some curing might already be initiated at melt-mixing, which is clearly undesirable. By preparing two different powder coating compositions - one comprising the curable resin and the other the curing additive such as crosslinking agent or catalyst - such undesired curing is avoided. However, since the curable resin and the curing additive needed for curing the resin are in separate parts, it is not straightforward to obtain a cured coating film with very good properties. The initially separated curable resin and curing additive need to be brought in each other's proximity before curing is initiated. This is particularly challenging in a system that cures at relatively low temperature, since curing is initiated already at a temperature at which the viscosity of the system is relatively high, and components cannot yet flow together.

In US 6,121,408 is disclosed a two-component powder coating composition that can be cured at a temperature of 160 °C or less when the two components are combined, wherein each of the two components comprises a resin that has no thermosetting properties at a temperature of 160 °C or less by itself. In the examples of US 6,121,408, coating films are prepared from a two-component powder coating composition, each component having an average particle size of 25 µm. The powder coating composition was applied using an electrostatic sprayer and was cured at 140 °C for 10 minutes. The resulting coating films, however, have poor hardness and poor impact resistance, indicating poor coating integrity.

In EP 1 477 534 A2 is described a fast reacting two-component powder coating composition with a resin in one component and a curing agent for the resin in the other component. In the composition of EP 1 477 534 A2, the ratio of the average particle size of the powder coating particles with resin to the average particle size of the powder coating particles with curing agent is in the range of from 1.3:1 to 60:1 in order to ensure that the powder coating particles with resin are attracted to the powder coating particles with curing agent when combined.

There is a need for powder coating compositions that result in coatings with improved surface appearance and coating integrity, in particular if applied as thin films and/or for curing systems that cure at low temperature such as is required for substrates that cannot be heated to temperatures above 140 °C or 150 °C, such as for example substrates of wood or engineered wood, or cannot be heated to temperatures above 100 °C or 110 °C, such as plastic substrates.

### Summary of the Invention

Surprisingly, it has been found that a powder coating composition with two or more powder coating components can be provided that has improved properties compared to a one-component powder coating composition with the same overall curing system. It has been found that such powder coating composition is obtained if curable resin and one or more curing additives for curing the curable resin are unevenly distributed over the two or more powder coating components, all powder coating components have relatively small particles, and a specific additive is dry-blended with the two or more powder coating components.

Accordingly, the invention provides in a first aspect a powder coating composition comprising a curing system comprising a curable resin and one or more curing additives for curing the curable resin, wherein the powder coating composition comprises:
- powder coating component A comprising the curable resin and/or at least one of the one or more curing additives;
- powder coating component B comprising the curable resin and/or at least one of the one or more curing additives;
- optionally a further powder coating component comprising the curable resin and/or at least one of the one or more curing additives;
- in the range of from 0.1 to 25 wt% of a dry-blended inorganic particulate additive C consisting of inorganic components i), ii), and iii), wherein:
   component i) is non-coated aluminium oxide or non-coated silica;
   component ii) is aluminium hydroxide and/or aluminium oxyhydroxide;
   and component iii) is silica, wherein, if component i) is non-coated silica, component iii) does not comprise non-coated silica; and
- optionally up to 35 wt% of a further dry-blended inorganic particulate additive D,
wherein the total wt% of dry-blended inorganic particulate additives C and D is at most 40 wt%, and wherein the wt% of dry-blended inorganic particulate additive is based on the weight of the powder coating components without dry-blended additive, wherein dry-blended inorganic particulate additive D is free of aluminium oxide, silica, aluminium hydroxide and aluminium oxyhydroxide, wherein powder coating component A, powder coating component B, and any further powder coating component differ in content of the curable resin and/or at least one of the one or more curing additives such that for any combination of two powder coating components:
- one of the two powder coating components comprises one of the one or more curing additives and the other powder coating component is free of that one of the one or more curing additives; or
- one of the two powder coating components comprises the curable resin and the other powder coating component is free of the curable resin; or
- if the two powder coating components in the combination comprise the curable resin and the same one or more of the one or more curing additive(s), for each of the one or more curing additive(s) present in both components, a weight ratio of that curing additive to curable resin is defined, and for at least one of the curing additive(s) comprised in both components, the weight ratios of that curing additive to curable resin for the two powder coating components differ at least 50%, preferably at least 70%,
wherein powder coating components A and B and any further powder coating component have a particle size distribution with a Dᵥ90 of at most 50 µm and a Dᵥ50 of at most 30 µm, wherein Dᵥ90 and Dᵥ50 are determined by laser diffraction according to ISO 13320 using the Mie model, and wherein for any combination of two powder coating components the ratio of the Dᵥ50 of one of the powder components to the Dᵥ50 of the other one of the powder coating components is in the range of from 0.8 to 1.2.

It has been found that by providing the powder coating composition as a composition with two or more powder coating components, the composition cures better than a one-component powder coating composition with the same overall composition and generally results in a coating film with very good properties and surface appearance. Without wishing to be bound to any theory, it is believed that due to the chemical distinctness of the powder coating components, the small particles, the narrow particle size distribution, and the presence of dry-blended inorganic particulate additive C, a stable and balanced arrangement of small particles of the different powder coating components is formed such that the curable resin and the one or more curing additives in the different components are in close proximity before the onset of curing.

Although the present invention is not limited to powder coating compositions with a curing system that cures at low temperature, the present invention is particularly advantageous for such powder coating compositions. By providing the curable resin and the one or more curing additives, in particular crosslinking agent(s) and curing catalyst(s) for the curable resin, in separate powder coating components, initiation of curing during melt-mixing of the powder coating components is avoided. Compared to prior art two-component low temperature curing powder coating compositions, improved coating integrity and surface appearance is obtained with the powder coating composition according to the invention.

A further advantage of the powder coating composition according to the invention is that relatively large amounts of dry-blended inorganic particulate additive can be added whilst maintaining very good coating properties. Thus, additives that are typically incorporated in powder coating components during the melt-mix step, can now be post-added. This is particularly advantageous for inorganic additives that become less effective if dispersed in a resin. Examples of such additives are silica as matting agent, pigments with a metallic effect (also known as luster pigments or pearlescent pigments), and biocidal pigments.

In a second aspect, the invention provides a substrate coated with a powder coating composition according to the first aspect of the invention.

### Detailed Description of the Invention

The powder coating composition according to the invention comprises a curing system comprising a curable resin and one or more curing additives for curing the curable resin.

Reference herein to a curing additive is to a compound that is needed for the curing of the curable resin, such as a curing agent that crosslinks with the curable resin, or that affects the speed of the curing reaction, such as a curing catalyst, a free-radical initiator such as a thermal radical initiator or a photo initiator, an accelerator, or an inhibitor. Reference herein to a curing catalyst is to a compound that catalyzes the cross-linking reaction between curable resin and a crosslinking curing agent, or, in case of a self-crosslinking curable resin, catalyzes the self-crosslinking reaction.

The one or more curing additives for curing the curable resin preferably comprise a curing agent that crosslinks with the curable resin and/or a curing catalyst. A crosslinking curing agent may be a resin in itself, such as for example an epoxy resin that crosslinks with a carboxyl-functional polyester resin or a polyamine resin that crosslinks with an epoxy resin. It will be appreciated that in case of a curing system with a curable resin and a curing agent that is a resin itself, any of the two resins can be considered the curable resin or the curing additive.

The powder coating composition comprises at least two powder coating components comprising the curable resin and/or at least one of the one or more curing additives: powder coating component A and powder coating component B. Optionally, the powder coating composition comprises a further powder coating component comprising the curable resin and/or at least one of the one or more curing additives.

Reference herein to a powder coating component is to powder coating particles that are obtained by melt-mixing at least two powder coating ingredients in a compounder such as an extruder. Each powder coating component comprises the curable resin and/or at least one of the one or more the curing additives and optionally one or more further powder coating ingredients, such as for example pigment, extender, or performance additive(s). Since a powder coating component is obtained by melt-mixing, it comprises a polymer that is able to soften, i.e. melt, in the compounder. This polymer may be the curable resin and/or one of the one or more curing additives if such curing additive is a resin in itself. In case such curing additive is not a resin, the powder coating component comprising such curing additive comprises at least part of the curable resin or of another of the one or more curing additives that is a resin in itself.

Powder coating components A and B and any optional further powder component(s) are different in composition, in particular in the content of the curable resin and the one or more curing additives. The content of the curable resin and/or at least one of the one or more curing additives in the respective powder coating components is such that for any combination of two powder coating components, at least one of the following applies:
1. One of the two powder coating components comprises one of the one or more curing additives and the other powder coating component is free of that one of the one or more curing additives.
2. One of the two powder coating components comprises the curable resin and the other powder coating component is free of the curable resin.
3. If 1. and 2 do not apply, i.e. both powder coating components in a combination of two powder coating components comprise the curable resin and the same one or more curing additive(s), the following applies. For each of the one or more curing additive(s) present in both components, a weight ratio of that curing additive to curable resin is defined. For at least one of the curing additive(s) present in both components, the weight ratios of that curing additive to curable resin for the two powder coating components differ at least 50%, preferably at least 70%.

Exemplified in a two-component powder coating composition with powder coating components A and B (free of any further powder coating component) with a curing system consisting of a curable resin and one curing agent: if both components A and B comprise curable resin and curing agent, and component A has a weight ratio of curing agent to curable resin of 0.10, then the weight ratio of curing agent to curable resin in power coating component B should be at most 0.05 (50% of 0.10) or at least 0.20 (curing agent/resin weight ratio in component A (0.10) is then 50% of ratio in component B (0.20)).

In case the powder coating composition comprises more than one curing additives for curing the curable resin, two powder coating components are considered sufficiently different if criterion 1., 2., or 3. is fulfilled for at least one of the curing additives. For a different combination of two powder coating components (in case of three or more powder coating components), at least one of the criteria may be fulfilled for a different curing additive.

Exemplified in a three-component powder coating composition with powder coating components A and B and one further powder coating component with a curing system consisting of a curable resin, a curing agent (crosslinking agent), and a curing catalyst: If powder coating component A comprises curable resin only (free of any of the curing agent and curing catalyst), powder coating component B comprises curable resin and all of the curing agent, and the further powder component comprises curable resin and all of the curing catalyst, then requirement 1. is fulfilled for any of the combinations of powder coating components (A-B; A-further component; and B-further component).

In one embodiment, the powder coating composition is a two-component powder composition, i.e. a powder coating composition comprising powder coating components A and B and no further powder coating components. Preferably, all or at least one of the one or more curing additives is present in one of the powder coating components and the other one component is free of that curing additive.

Preferably, criterion 1. is fulfilled for any combination of two powder coating components in the powder coating composition.

Powder coating components A and B and any further powder coating components have small particles, i.e. smaller than standard size powder coating particles. All powder coating components in the composition have a particle size distribution with a Dᵥ90 of at most 50 µm, and a Dᵥ50 of at most 30 µm, preferably a Dᵥ90 of at most 45 µm and a Dᵥ50 of at most 25 µm, preferably at most 20 µm. For practical reasons, the Dᵥ90 is preferably not lower than 3 µm and the Dᵥ50 is preferably not lower than 1 µm.

Dᵥ90 is the particle size value at which 90% of the total volume of particles has a particle size below that value. Accordingly, Dᵥ50 is the particle size value at which 50% of the total volume of particles has a particle size below that value. Reference herein to Dᵥ90 or Dᵥ50 is to Dᵥ90 or Dᵥ50 as determined by laser diffraction according to ISO 13320 using the Mie model.

In one embodiment, the particle size distribution is such that Dᵥ90 is at most 25 µm, preferably at most 20 µm, and Dᵥ50 is at most 12 µm. Such small particles are generally obtained by jet-milling. It has been found that a powder coating composition with such small powder coating particles provides better aesthetics of the cured coating through better flow and levelling. Moreover, thinner films can be sprayed.

Preferably, the ratio between Dᵥ90 and Dᵥ50 is in the range of from 1.5 to 4.0 for any one of the powder coating components.

The particle size distribution is similar for powder coating components A and B and any further powder coating components. For any combination of two powder coating components in the composition, the ratio of the Dᵥ50 of one of the two powder components to the Dᵥ50 of the other one of the powder coating components is in the range of from 0.8 to 1.2, preferably of from 0.9 to 1.1. The particle size distributions of the various powder coating components may suitably be obtained by co-milling the separately melt-mixed and extruded powder coating components. By such co-milling, typically followed by co-sieving, the particle size distribution of all powder coating components will be similar.

Preferably, the powder coating composition comprises powder coating components A and B in a weight ratio in the range of from 30:70 to 70:30, more preferably of from 35:65 to 65:35, even more preferably of from 40:60 to 60:40. In case the powder coating composition comprises more than two powder coating components, the weight ratio of any combination of powder coating components is preferably in the range of from 30:70 to 70:30, more preferably of from 35:65 to 65:35, even more preferably of from 40:60 to 60:40.

The curing system may be any curing system comprising a curable resin and one or more curing additives known to be suitable for powder coating compositions. Such curing systems are well known in the art.

Suitable curable resins are for example carboxyl-functional resins such as carboxyl-functional polyester, polyester-amide or (meth)acrylate-based resins; amine-functional resins such as polyamide or polyester-amide resins; hydroxyl-functional resins; epoxy or glycidyl-functional resins; anhydride-functional resins; and resins with unsaturated bonds such as unsaturated polyester.

Curing additives such as crosslinking curing agents or curing catalysts for curing such curable resins are well known in the art. Suitable curing additives for curing carboxyl-functional resins are for example β-hydroxyalkylamides or polyisocyanate, such as triglycidyl isocyanurate.

In one embodiment, the curable resin is carboxyl-functional polyester or carboxyl-functional polyacrylate, preferably carboxyl-functional polyester, and the one or more curing additives comprise a crosslinking agent, preferably a β-hydroxyalkylamide or a polyisocyanate, preferably triglycidyl isocyanurate. Preferably, the curable resin is carboxyl-functional polyester and the one or more curing additives comprise a β-hydroxyalkylamide as crosslinking agent.

In other embodiments, the curing system is an epoxy-polyester system or an epoxy-amine system. In an epoxy-polyester curing system, the one or more curing additives is an epoxy resin and the curable resin is a polyester resin with crosslinkable functional groups. The epoxy resin crosslinks with the functional groups on the polyester resin. In an epoxy-amine curing system, the one or more curing additives is a polyamine resin and the curable resin is an epoxy resin. The polyamine resin acts as curing agent that crosslinks the epoxy resin.

The powder coating composition according to the invention is particularly suitable for curing systems that are capable of curing at a temperature below 160 °C, preferably below 140 °C. The curable resin and the curing additive(s) for curing the curable resins can be split over different powder coating components such that none of the powder coating components is capable of curing at a temperature below 160 °C by itself. Therewith initiation of curing during melt-mixing is avoided and issues with storage stability are avoided or minimized. Due to the stable and balanced arrangement of small particles of the different powder coating components, the curable resin and the one or more curing additives in the different components are in close proximity before the onset of curing and coatings with good appearance and integrity can be obtained. In one embodiment the curing system is capable of curing at a temperature below 160 °C, preferably below 140 °C, and each of powder coating components A and B and any further powder coating component is not capable of curing at a temperature below 160 °C by itself. Such curing systems are well-known in the art.

Powder coating components A and B and any further powder coating component may further comprise typical powder coating ingredients such as color pigments, extender pigments, and performance additives, for example melt flow agent, degassing agent, or dispersing agent.

The powder coating composition comprises 0.1 to 25 wt% of a dry-blended inorganic particulate additive C. Additive C consists of inorganic components i), ii), and iii), wherein:
component i) is non-coated aluminium oxide or non-coated silica;
component ii) is aluminium hydroxide and/or aluminium oxyhydroxide; and
component iii) is silica.
If component i) is non-uncoated silica, component iii) does not comprise non-coated silica.

Additive C is dry-blended with the powder coating components. The additive may be dry-blended with the powder coating components as a mixture of inorganic components i), ii) and iii) or as separate inorganic components. Preferably, at least components i) and ii) are premixed before dry-blending inorganic particulate additive C with the powder coating components. Inorganic component iii) may be at least partly pre-mixed with inorganic components i) and ii) before dry-blending with the powder coating components or may be dry-blended separately with the powder coating components.

Additive C - (partly) pre-mixed or as separate inorganic components i), ii) and iii) - may be dry-blended with the powder coating components in any suitable way, for example by:
- injecting the additive to the powder components at the mill where extruded melt-mixed powder components are co-milled to the desired particle size;
- adding the additive to the powder components at the stage of sieving after co-milling;
- post-adding the additive to one of the powder coating components or to the combined powder coating components in a powder tumbler, such as

for example a Turbula® mixer, or other suitable mixing device. Preferably, additive C is post-added to the combined powder coating components in a powder tumbler or other suitable mixing device.

Without wishing to be bound to any theory, it is believed that dry-blended inorganic particulate additive C controls the charge of the two or more powder coating components, and therewith helps providing a stable and evenly distributed arrangement of small particles of the two or more powder coating components, so that the particles of the different powder coating components can be deposited on a substrate in close proximity to each other.

Inorganic component (i) has a discharging function and is capable of exchanging electrons with the powder coating particles. It has Lewis acid and Lewis base sites at its surface so that it can accept and donate electrons. In order to have such discharging properties, inorganic component (i) is non-coated.

Inorganic component i) may be aluminium oxide or silica. Aluminium oxide is preferred, but in powder coating applications wherein aluminium oxide is undesired, for example for coatings that are in direct contact with drink water such as coatings for inner surfaces of drink water tubes, silica may be used instead. If inorganic component i) is aluminium oxide, it is preferably crystalline aluminium oxide. Any structural form (polymorph) of aluminium oxide may be used. Gamma-aluminium oxide, optionally in combination with delta-aluminium oxide, is particularly preferred.

If component i) is silica, it may be any type of non-coated silica, for example fumed silica (also referred to as pyrogenic silica), micronized amorphous silica (commercially available as Syloid ® from Grace), precipitated silica, mixed metal-silicon oxides, and naturally occurring silica such as for example diatomaceous earth. Preferably, the silica is amorphous silica. Micronized amorphous silica is particularly preferred.

Inorganic component ii) is aluminium hydroxide and/or aluminium oxyhydroxide, preferably crystalline aluminium hydroxide and/or aluminium oxyhydroxide. Any structural form (polymorph) of aluminium hydroxide or aluminium oxyhydroxide may be used, such as alpha-aluminium oxyhydroxide, alpha-aluminium hydroxide, gamma-aluminium oxyhydroxide, or gamma-aluminium hydroxide, preferably gamma-aluminium oxyhydroxide or gamma-aluminium hydroxide. Inorganic component ii) may be surface-treated (coated) to prevent caking of the component. Inorganic component ii) helps dispersing the other inorganic components in additive C. It also has a buffering function in the sense that component ii) makes the functioning of inorganic components i) and iii) less sensitive to concentration.

Inorganic component iii) is silica. Any type of silica may be used, including fumed silica (also referred to as pyrogenic silica), precipitated silica, micronized amorphous silica, mixed metal-silicon oxides, and naturally occurring silica such as for example diatomaceous earth. Preferably, the silica is amorphous silica. The silica preferably is surface-treated (coated) to give it a positive or negative tribocharge. A negative tribocharge can for example be given by treating the silica surface with an organosilane such as dimethyldichlorosilane, hexamethyldisilazane, polydimethylsiloxane, or mixtures thereof. A positive tribocharge can for example be given by treating the silica surface with an organosilane with amino or ammonium end groups. Surface-treated fumed silicas with a negative or positive tribocharge are commercially available, for example from the HDK® fumed silica range ex. Wacker Chemie AG. Tribocharge can be determined by blowing silica particles off iron carrier particles in a q/m meter (ex. Epping GmbH, Germany).

Preferably, inorganic component iii) comprises or consists of a coated silica with a negative tribocharge.

The silica may be wax-coated silica. Preferably the powder coating composition is free of any wax-coated silica.

Inorganic component iii) may comprise more than one type of silica. If two different silicas are used, preferably one silica is a surface-treated silica with a negative tribocharge, and the other silica is a non-coated silica or is a surface-treated silica with a positive tribocharge.

It is believed that component iii) is able to charge the powder coating particles, either by wrapping powder coating particles or agglomerates of powder coating particles of different powder coating components, or by tribocharging powder coating particles through particle-particle contact between silica particles and powder coating particles.

If component i) is non-coated silica, then component iii) does not comprise non-coated silica. In that case, the silica in component iii) is coated, preferably coated to obtain a negative tribocharge. The terms coated and surface-treated in connection with inorganic particles are used herein interchangeably.

If component i) is aluminium oxide, the Dᵥ50 of the aluminium oxide particles is preferably at most 0.2 µm. The Dᵥ50 of the aluminium hydroxide and/or aluminium oxyhydroxide particles in inorganic component ii) is preferably in the range of from 0.5 to 3.0 µm, more preferably of from 0.9 to 2.5 µm.

The Dᵥ50 of the silica in inorganic component iii) and, if present, in component i) is preferably at most 20 µm, more preferably in the range of from 0.01 to 15 µm.

To avoid undesired electrostatic phenomena, the powder coating composition generally does not comprise more than 1.0 wt% of aluminium oxide, based on the total weight of the composition. Preferably, the amount of aluminium oxide is in the range of from 0.01 to 0.4 wt%. The amount of component ii) in the powder coating composition generally does not exceed 5.0 wt%, based on the total weight of the composition. Preferably, the amount of component ii) is in the range of from 0.01 to 3 wt%, more preferably of from 0.02 to 1 wt%. In case inorganic component i) is aluminium oxide, the weight ratio of inorganic components i) and ii) in dry-blended inorganic particulate additive C preferably is in the range of from 1:99 to 80:20, more preferably of from 10:90 to 60:40, even more preferably of from 20:80 to 50:50.

The percentage of component iii) in dry-blended inorganic particulate additive C preferably is in the range of from 5 to 99 wt%, more preferably of from 10 to 95 wt%.

In one embodiment, inorganic component i) is aluminium oxide, the weight ratio of inorganic components i) and ii) in dry-blended inorganic particulate additive C is in the range of from 10:90 to 60:40, and dry-blended inorganic particulate additive C comprises in the range of from 10 to 95 wt% of inorganic component iii).

The total amount of additive C is in the range of from 0.1 to 25 wt% based on the weight of the powder coating components without dry-blended additive(s), i.e. the total weight of powder coating components A and B and any further powder coating component.

It has been found that by dry-blending particulate additive C, in particular an additive C that is relatively rich in silica, a coating with a matt appearance can be obtained. The amount of additive C needed to obtain a specific gloss level strongly depends on the specific surface area and thus on the particle size of the powder coating particles. Coverage of powder coating particles by inorganic particles will result in matting of the coating. The smaller the particles, the larger the surface area and therewith the larger the amount of additive C needed for a matt appearance. For any particle size distribution of the powder coating components, the amount of additive C, more in particular the amount of silica, will determine the gloss level of the coating obtained. It is an advantage of the coating composition according to the invention that the degree of matting can be tuned by controlling the amount of dry-blended inorganic particulate additive C.

In case the powder coating components have a Dᵥ90 in the range of from above 25 to 50 µm and a Dᵥ50 in the range of from above 12 to 30 µm, the amount of additive C may be as low as 0.5 wt%, preferably is in the range of from 0.5 to 10 wt%, more preferably of from 1.0 to 8.0 wt%, more preferably in the range of from 1.2 to 5.0 wt% in order to obtain a coating with a matt appearance. If the powder coating component has a Dᵥ90 in the range of from above 35 to 50 µm and a Dᵥ50 in the range of from above 12 to 30 µm, the amount of dry-blended inorganic particulate additive is preferably below 5.0 wt%, more preferably of from 1.0 to 5.0 wt%, even more preferably of from 1.2 to 5.0 wt%.

In case the powder coating components have a Dᵥ90 of 25 µm or lower and a Dᵥ50 of 12 µm or lower, the amount of additive C may be up to 25 wt% in order to obtain a coating with a matt appearance, whilst still obtaining a coating with good surface appearance and good coating integrity. The powder coating compositions wherein the powder coating components have a Dᵥ90 of 25 µm or lower and a Dᵥ50 of 12 µm or lower, the amount of additive C is preferably at least 3.0 wt%, more preferably in the range of from 5.0 to 25 wt%, even more preferably of from 8.0 to 20 wt%, in order to obtain a coating with a matt appearance.

Any reference herein to weight percentages for additives C and D are weight percentages based on the weight of the powder coating components without dry-blended additive(s).

If a matt coating is desired, i.e. a coating with less than 40 gloss units, preferably less than 15 gloss units, as determined at an angle of 60°, the percentage of component iii) in dry-blended inorganic particulate additive C is preferably at least 20 wt%, more preferably at least 40 wt%, and may be up to 99 wt%. For a matt coating, a percentage of component iii) in dry-blended inorganic particulate additive C in the range of from 50 to 99 wt% is particularly preferred, even more in particular in the range of from 60 to 98 wt%. For a matt coating, inorganic component iii) of additive C preferably comprises two different types of silica, preferably one type of silica with a negative tribocharge and another type of silica with a positive tribocharge. A combination of surface-treated silica with a negative tribocharge and non-coated silica or a surface-treated silica with a positive tribocharge is particularly preferred.

It is an advantage of the powder coating composition according to the invention that a low gloss coating can be obtained, even with a powder coating composition that cures at low temperature. Gloss reduction in powder coatings is typically achieved by using two incompatible resins or two resins that become incompatible during curing, for example because they differ in reactivity and thus in curing time. In a curing system that cures at low temperature, the resin has high reactivity. Combining such resin with a resin with lower reactivity would impede the ability to cure at a low temperature. With the powder coating composition according to the invention, a matt coating can be obtained without the need to use curable resins that differ in reactivity.

In case matt coating appearance is not relevant, the amount of additive C is preferably in the range of from 0.1 to 3.0 wt%, more preferably of from 0.2 to 2.0 wt%, even more preferably of from 0.3 to 1.5 wt%, based on the weight of the powder coating components without dry-blended additive(s). In this embodiment, the percentage of component iii) in dry-blended inorganic particulate additive C preferably is in the range of from 5.0 to 70 wt%, more preferably of from 10 to 60 wt%, or, in case the powder coating composition is free of further inorganic particulate additive D, preferably in the range of from 5.0 to 40 wt%.

The powder coating composition may comprise up to 35 wt% of a further dry-blended inorganic particulate additive D. Additive D differs from additive C and does not comprises any of aluminium oxide, silica, aluminium hydroxide or aluminium oxyhydroxide. The total amount of dry-blended inorganic particulate additives C and D is at most 40 wt%, preferably at most 35 wt%, more preferably at most 30 wt%, based on the total weight of the powder coating components without dry-blended additive(s).

The further dry-blended inorganic particulate additive D may be any inorganic particulate material that may provide functionality to the powder coating composition, for example inorganic color pigment, inorganic pigment with metallic effect, biocidal pigment, anticorrosive pigment, extenders, opacifying pigment, conductive or anti-static pigment, infrared-absorbing pigment, radiation shielding pigment, glass flake, abrasion resistance agent, or any combination of two or more thereof.

Dry-blended inorganic particulate additive D is an inorganic particulate material. The inorganic material may be surface-treated with an organic compound to modify its surface properties.

Dry-blended inorganic particulate additive D is preferably post-added to the powder coating components in a powder tumbler or other suitable mixing device. Dry-blended inorganic particulate additives C and D may be dry-blended with the powder coating components simultaneously.

In one embodiment, dry-blended inorganic particulate additive D comprises an inorganic pigment with a metallic effect or is an inorganic pigment with a metallic effect. Such pigments are known in the art and are also referred to as pearlescent pigment or luster pigment. Such pigments are solid pigments, typically in flake form, and may be of metal, metal alloy, or non-metal material such as for example mica or borosilicates. Examples of pigments with a metallic effect are flakes of aluminium, aluminium alloy, stainless steel, copper, tin, lithium, bronze or brass, mica and borosilicate. Such flakes may be coated with metal oxides to provide special color effects.

Conventionally, pigments with a metallic effect are added to powder coating composition in a so-called bonding step. Such bonding step is known in the art and is typically done by:
- heating a powder coating component to a temperature around the glass transition temperature but below the curing temperature of any binder polymer in the powder coating component, under an inert atmosphere;
- adding the pigment with metallic effect to the heated powder coating component under stirring whilst maintaining the temperature until the pigment is bonded to the powder coating particles, typically 10-20 minutes; and
- cooling the powder coating composition.

In the powder coating composition of the invention, inorganic pigment with a metallic effect is added as a dry-blended additive. Thus, a heating step for bonding is not needed, which is particularly advantageous for powder coating components that cure at a relatively low temperature.

Moreover, it has been found that by dry-blending the pigment with a metallic effect, more of such pigment can be added than in the conventional bonding process. Breaking of pigment flakes that typically occurs due to the high speed stirring in the bonding step is avoided.

If additive D comprises an inorganic pigment with a metallic effect or is an inorganic pigment with a metallic effect, the powder coating composition may comprise any suitable amount of such pigment, up to 35 wt%. Preferably, the powder coating composition comprises in the range of from 1.0 to 35 wt% of as dry-blended inorganic particulate additive D, more preferably of from 5.0 to 30 wt%, even more preferably of from 10 wt% to 30 wt%, or even of from 12 wt% to 30 wt%.

Additive D may have any suitable particle size, depending on the type of inorganic material and the desired effect. Typically, the average particle size (Dᵥ50) will be in the range of from 5 to 100 µm, preferably of from 5 to 50 µm.

Preferably the coating composition is free of any dry-blended additive other than dry-blended inorganic particulate additives C and D. If free of any such further dry-blended additive, the coating composition consists of powder coating components A, B and any further powder coating component and dry-blended inorganic particulate additives C and D.

In a second aspect, the invention provides a substrate coated with a powder coating composition according to the first aspect of the invention.

The substrate may be any substrate suitable for powder coating, for example a metal substrate. If the powder coating composition is a composition that cures at a relatively low temperature, i.e. at or below 140 °C, the substrate may be a substrate that cannot be exposed to high curing temperatures, such as wood, engineered wood, or plastic.

Prior to applying the powder coating composition according to the invention, the substrate surface may be treated by a surface treatment to remove any contaminants and/or to improve corrosion resistance of the substrate. Such surface treatments are well known in the art and commonly applied to surfaces to be coated with powder coatings.

In particular in case the powder coating composition comprises a relatively large amount of additive C for providing a matt coating, or comprises an additive D for providing specific functionality or appearance, such as a luster effect, opacity, biocidal action, the powder coating composition according to the invention may be applied as a topcoat over a first layer of powder coating composition that does not have such specific functionality or appearance. The first layer may then be a powder coating composition not according to the invention.

Due to the relatively small particle size of the powder coating components, the powder coating composition of the invention can be applied in a relatively thin layer. It has been found that even if applied in a thin layer, a coating with integrity and good surface appearance is obtained.

The powder coating composition can be applied with any application technique known in the art, such as fluid bed application or spray application, preferably spray application with a corona gun.

The invention is further illustrated by the following non-limiting examples.

### Examples

In Table 1, the dry-blended inorganic particulate additives used in the Examples are shown.

**Table 1 - Dry-blend additives used in the Examples (ingredients in wt%)**

| | | Dry-blended additive | | | | |
|---|---|---|---|---|---|---|
| ingredient | inorganic component | 1 | C1 | C2 | C3 | D |
| Fumed aluminium oxide^{a} | i) | 40 | 20 | 1.8 | 12.5 | |
| Aluminium hydroxide^{b} | ii) | 60 | 60 | 5.5 | 37.5 | |
| Surface-treated fumed silica (negative tribocharge)^{c} | iii) | | 20 | 42.7 | 12.5 | |
| Non-coated silica^{d} | iii) | | | 50.0 | 37.5 | |
| Pearlescent pigment ^{e} | | | | | | 100 |

| | | | | | | |
|---|---|---|---|---|---|---|
| ^{a} AEROXIDE®Alu C: fumed aluminium oxide; no surface treatment (non-coated). ^{b} MARTINAL OL 107C: surface-treated aluminium hydroxide. ^{c} HDK H3004 (ex. Wacker): fumed silica, surface-treated with hexamethyldisilazane; Dᵥ50 < 20 µm. ^{d} Syloid® C811 (ex. Grace): micronized amorphous porous silica; no surface treatment; average particle size 11 µm. ^{e} Iriodin® 303 Royal Gold: natural mica flakes coated with a thin layer of titanium dioxide, iron oxide and tin oxide. | | | | | | |

### EXAMPLE 1

Powder coating components were prepared by melt-mixing all ingredients as indicated in Table 2 in an extruder. For all of the extruded powder coating components, a part was milled and sieved to a standard particle size distribution (Dᵥ90 = 110 µm; Dᵥ50 = 35 µm) and a part was milled and sieved to obtain smaller particles (Dᵥ90 = 40 µm; Dᵥ50 = 18 µm).

Powder coating component 1 was orange in color. Powder coating components A1 and B1 were mixed in a weight ratio of A1/B1 of 55/45. The mixed powder coating components were orange in color, matching the color of powder coating component 1.

Powder coating compositions were prepared without additive or by dry-blending 1 wt% of pre-mixed additive to powder coating component 1 or to mixed powder coating components A1/B1, based on the weight of the powder coating component(s) without additive. Additive was dry-blended with the powder coating component(s) in a Turbula powder mixer for 30 minutes. In Table 3, the type of additive and particle size of the powder coating component(s) is shown.

**Table 2 - Powder coating components (ingredients in wt%)**

| | 1 | A1 | B1 |
|---|---|---|---|
| Carboxyl- functional polyester | 90.50 | 94.61 | 85.74 |
| Hydroxyalkylamide crosslinker¹ | 3.76 | | 8.42 |
| Benzoin (degassing agent) | 0.52 | 0.47 | 0.30 |
| Ceridust | 2.09 | 1.89 | 2.33 |
| Melt flow agent² | 1.25 | 1.14 | 1.34 |
| Pink pigment3 | 1.04 | 1.89 | |
| Yellow pigment⁴ | 0.84 | | 1.87 |

| | | | |
|---|---|---|---|
| ¹ Primid XL-552 ² BYK-LP G21191 ³ BRICOFOR PINK 3BEP ⁴ Hostaperm Yellow H3G | | | |

### Curing time at 140 °C

The powder coating compositions were sprayed onto an aluminium electrode panel using a corona spray gun. The electrode voltage was -30 kV. The electrode panels were then cured at 140 °C until full cure was achieved. Full cure was achieved when the coating did not dissolve in organic solvent (methyl ethyl ketone) upon immersion. The color pigment in the coating served as marker for dissolution of the coating in the solvent. The results are shown in Table 3.

### Spraying stability

For powder coating compositions 5, 6, and 7, the stability at spraying (resistance against separation of the components at spraying) was determined by spraying the powder coatings using a corona spray gun to an aluminium electrode panel at -30 kV electrode voltage. The color of the electrode was determined. If the color of the electrode is orange, no separation of the powder coating components has occurred.

**Table 3 - Powder coating compositions**

| | Powder coating component | Additive | Dᵥ90; Dᵥ50 (µm) | Time to full cure at 140 °C (min) | Color of electrode |
|---|---|---|---|---|---|
| 1* | 1 | none | 110; 35 | 40 | n.d. |
| 2* | 1 | none | 40; 18 | 40 | n.d. |
| 3* | A1+B1 | none | 110; 35 | > 60 | n.d. |
| 4* | A1+B1 | none | 40; 18 | > 60 | n.d. |
| 5* | A1+B1 | 1 | 40; 18 | 45-50 | yellow |
| 6 | A1+B1 | C1 | 40; 18 | 25 | orange |
| 7* | A1+B1 | none | 40; 18 | 45-50 | yellow |

| | | | | | |
|---|---|---|---|---|---|
| * comparison powder coating composition; n.d.: not determined | | | | | |

The results show that powder coating composition 6 (according to the invention) results in a coating that cures quicker at low temperature than a one-component powder composition with comparable overall composition (composition 2*) and is, moreover, stable against separation upon spraying in an electrical field.

### EXAMPLE 2

Powder coating components A2 and B2 were prepared by melt-mixing all ingredients as indicated in Table 4 in an extruder. For both of the extruded powder coating components, a part was milled and sieved to a particles with a particle size distribution having a Dᵥ90 of 40 µm and a Dᵥ50 of 20 µm, and a part was jet-milled and sieved to obtain smaller particles with a particle size distribution having a Dᵥ90 of 20 µm and a Dᵥ50 of 8 µm.

**Table 4 - Powder coating components (ingredients in wt%)**

| | Component A2 | Component B2 |
|---|---|---|
| polyester resin⁵ | 82.65 | |
| polyester resin⁶ | 12.63 | |
| epoxy resin⁷ (as crosslinking agent) | | 95.50 |
| benzoin (degassing agent) | 0.58 | 0.50 |
| melt flow agent² | 2.07 | 2.00 |
| pink pigment³ | 2.07 | |
| blue pigment⁸ | | 2.00 |

| | | |
|---|---|---|
| ⁵ REAFREE 6818 ⁶ REAFREE C4705-10 ⁷ KUKDO KD1014 ⁸ Sudafast Blue 2789 | | |

Two-component polyester-epoxy powder coating compositions 8 to 11 were prepared by mixing components A2 and B2 in a 60/40 weight ratio with 1 wt% (based on the total weight of the powder coating components) of pre-mixed additive 1 or pre-mixed additive C1 in a Turbula powder mixer for 30 minutes, as indicated in Table 5.

### Spraying stability

For powder coating compositions 8 to 11, the stability at spraying (resistance against separation of the components at spraying) was determined by spraying the powder coating compositions at a positive and a negative electrode (+30 kV, -30 kV) in a non-ionized spray cloud using a corona gun. The color of the electrodes was determined by visual inspection. If one of the panels had a bluer or redder color, separation of the powder coating components had occurred. If both colors were the same, no separation of the powder coating components had occurred. The results are shown in Table 5.

**Table 5 - Powder coating compositions**

| | Powder coating component | Additive | Dᵥ90; Dᵥ50 (µm) | Color of electrode |
|---|---|---|---|---|
| 8* | A2+B2 | 1 | 40; 20 | separation at electrodes |
| 9^{*} | A2+B2 | 1 | 20; 8 | separation at electrodes |
| 10 | A2+B2 | C1 | 40; 20 | no separation at electrodes |
| 11 | A2+B2 | C1 | 20; 8 | no separation at electrodes |

| | | | | |
|---|---|---|---|---|
| * comparison powder coating composition | | | | |

As can be seen from the results, dry-blending additive C1 comprising inorganic components i), ii), and iii) resulted in a two-component powder coating composition that is stabilized against separation upon spraying, whilst two-component dry-blended inorganic particulate additive 1 did not protect against separation of the powder coating components upon spraying.

### EXAMPLE 3

Two-component polyester-epoxy powder coating composition 12 was prepared by mixing components A2 and B2 in a 60/40 weight ratio and dry-blending 11 wt% of partly premixed additive C2 (components i) and ii) pre-mixed with part of the surface-treated fumed silica) in a Turbula powder mixer for 30 minutes.

The powder coating composition was spray-applied with a corona spray gun on both a metal and a MDF substrate (film thickness 20 µm). The coated panels were cured in a convection oven at 140 °C for 20 minutes. On both substrates, the powder coating composition had fully flowed and leveled and an integral matt polymer film was obtained (less than 5 gloss units measured by light reflection at an angle of 60 ° using a glossmeter from Rhopoint Instruments). The silica was fully bonded; it could not be removed by rubbing with methyl ethyl ketone.

**Table 6 - Powder coating compositions of Examples 3 and 4**

| | Powder coating component | Additive (wt% based on powder coating components) | Dᵥ90; Dᵥ50 (µm) |
|---|---|---|---|
| 12 | A2+B2 | 11 wt% C2 | 20; 8 |
| 13 | A2+B2 | 1.6 wt% C3 + 25 wt% D | 20; 8 |

### EXAMPLE 4

Two-component polyester-epoxy powder coating composition 13 was prepared by mixing components A2 and B2 in a 60/40 weight ratio and dry-blending 1.6 wt% of partly premixed additive C3 (components i) and ii) pre-mixed with the surface-treated fumed silica) and 25 wt% of additive D (pearlescent or luster pigment) in a Turbula powder mixer for 30 minutes.

The powder coating composition was spray-applied with a corona spray gun on a metal substrate (film thickness 20 µm). The coated panel was cured in a convection oven at 140 °C for 20 minutes. The powder coating composition had fully cured and the cured coating had a very even distribution of luster pigment, with a flat, orange-peel-free finish. The luster pigment was embedded into the coating to form an integral part of the coating; it could not be removed by rubbing with methyl ethyl ketone.

### EXAMPLE 5

Powder coating components A3 and B3 were prepared by melt-mixing all ingredients as indicated in Table 7 in an extruder. For both of the extruded powder coating components, a part was milled and sieved to a particles with a standard particle size distribution having a Dᵥ90 of 110 µm and a Dᵥ50 of 35 µm, and a part was jet-milled and sieved to obtain smaller particles with a particle size distribution having a Dᵥ90 of 20 µm and a Dᵥ50 of 8 µm.

**Table 7 - Polyester-epoxy powder coating components (ingredients in wt%)**

| | Component A3 | Component B3 |
|---|---|---|
| Carboxyl- functional polyester | 95.38 | |
| epoxy resin (crosslinking agent)⁹ | | 95.50 |
| benzoin (degassing agent | 0.50 | 0.50 |
| melt flow agent² | 2.06 | 2.00 |
| pink pigment³ | 2.06 | |
| blue pigment⁸ | | 2.00 |

| | | |
|---|---|---|
| ⁹ DER 663U-E | | |

Powder coating compositions 14 and 15 were made by dry-blending 1 wt% of additive C1 to a mixture of 60 wt% of polyester component A3 and 40 wt% of epoxy component B3 in a Turbula powder mixer for 30 minutes, as indicated in Table 9.

Powder coating compositions 14 and 15 were electrostatically applied with a corona spray gun to aluminium panels and cured in a convection oven at 180 °C for 15 minutes. Composition 14 was applied at a film thickness of 60 µm; composition 15 was applied at a film thickness of 20 µm. The mechanical properties of the cured coatings were determined in a reverse impact test; solvent resistance was tested by immersion of the cured coatings in methyl ethyl ketone.

The cured coating from composition 14 showed orange peel and poor integrity of the coating. Discrete colors were visible showing that the powder coating components had not fully mixed. In the reverse impact test the cured coating failed upon dropping the impact from a height of 25 cm. The coating partly dissolved upon immersion in methyl ethyl ketone.

The cured coating from composition 15 was orange-peel-free and without defects. The coating did not dissolve in methyl ethyl ketone. In the reverse impact test, the coating survived the drop of the impact from a height of 75 cm.

### EXAMPLE 6

Powder coating components A4 and B4 were prepared by melt-mixing all ingredients as indicated in Table 8 in an extruder. For powder coating component A4, a part was milled and sieved to a particles with a standard particle size distribution having a Dᵥ90 of 110 µm and a Dᵥ50 of 35 µm, and a part was jet-milled and sieved to obtain smaller particles with a particle size distribution having a Dᵥ90 of 20 µm and a Dᵥ50 of 8 µm. Powder coating component B4 was jet-milled and sieved to obtain smaller particles with a particle size distribution having a Dᵥ90 of 20 µm and a Dᵥ50 of 8 µm.

Powder coating compositions 16 and 17 were made by dry-blending 1 wt% of additive C1 to a mixture of 66 wt% of epoxy component A4 and 34 wt% of amine component B4 in a Turbula powder mixer for 30 minutes, as indicated in Table 9.

Powder coating compositions 16 and 17 were electrostatically applied using a corona gun to aluminium panels and cured in a convection oven at 80 °C for 15 minutes. Composition 16 was applied at a film thickness of 60 µm; composition 17 at a film thickness of 20 µm.

The cured coating from composition 16 showed orange peel and separation of colors. The cured coating from composition 17 was smooth and orange-peel-free and had an even color (no separation of colors), showing that the two components have not been separated upon spraying.

**Table 8 - Epoxy-amine powder coating components (ingredients in wt%)**

| | Component A4 | Component B4 |
|---|---|---|
| Epoxy resin⁷ | 95.50 | |
| Amine adduct¹⁰ | | 95.38 |
| benzoin (degassing agent) | 0.50 | 0.50 |
| melt flow agent² | 2.00 | 2.06 |
| pink pigment³ | | 2.06 |
| blue pigment⁸ | 2.00 | |

| | | |
|---|---|---|
| ⁷ KUKDO KD1014 ¹⁰ Amine-functional resin based on the reaction product of solid bisphenol A epoxy and a cycloaliphatic amine | | |

**Table 9 - Powder coating compositions Examples 5 and 6 (ingredients in wt%)**

| | | Dᵥ90; Dᵥ50 (µm) of A3 | Dᵥ90; Dᵥ50 (µm) of B3 | Additive |
|---|---|---|---|---|
| 14* | A3+B3 | 110; 35 | 110; 35 | 1 wt% C1 |
| 15 | A3+B3 | 20; 8 | 20; 8 | 1 wt% C1 |
| 16* | A4+B4 | 110; 35 | 20; 8 | 1 wt% C1 |
| 17 | A4+B4 | 20; 8 | 20; 8 | 1 wt% C1 |

| | | | | |
|---|---|---|---|---|
| * comparison powder coating composition | | | | |

## Claims

1. A powder coating composition comprising a curing system comprising a curable resin and one or more curing additives for curing the curable resin, wherein the powder coating composition comprises:
- powder coating component A comprising the curable resin and/or at least one of the one or more curing additives;
- powder coating component B comprising the curable resin and/or at least one of the one or more curing additives;
- optionally a further powder coating component comprising the curable resin and/or at least one of the one or more curing additives;
- in the range of from 0.1 to 25 wt% of a dry-blended inorganic particulate additive C consisting of inorganic components i), ii), and iii), wherein:
component i) is non-coated aluminium oxide or non-coated silica; component ii) is aluminium hydroxide and/or aluminium oxyhydroxide; and component iii) is silica, wherein, if component i) is non-coated silica, component iii) does not comprise non-coated silica; and
- optionally up to 35 wt% of a further dry-blended inorganic particulate additive D,
wherein the total wt% of dry-blended inorganic particulate additives C and D is at most 40 wt%, and wherein the wt% of dry-blended inorganic particulate additive is based on the weight of the powder coating components without dry-blended additive,
wherein dry-blended inorganic particulate additive D is free of aluminium oxide, silica, aluminium hydroxide and aluminium oxyhydroxide,
wherein powder coating component A, powder coating component B, and any further powder coating component differ in content of the curable resin and/or at least one of the one or more curing additives such that for any combination of two powder coating components:
- one of the two powder coating components comprises one of the one or more curing additives and the other powder coating component is free of that one of the one or more curing additives; or
- one of the two powder coating components comprises the curable resin and the other powder coating component is free of the curable resin; or
- if the two powder coating components in the combination comprise the curable resin and the same one or more of the one or more curing additive(s), for each of the one or more curing additive(s) comprised in both components, a weight ratio of that curing additive to curable resin is defined, and for at least one of the curing additive(s) comprised in both components, the weight ratios of that curing additive to curable resin for the two powder coating components differ at least 50%, preferably at least 70%,
wherein powder coating components A and B and any further powder coating component have a particle size distribution with a Dᵥ90 of at most 50 µm and a Dᵥ50 of at most 30 µm, wherein Dᵥ90 and Dᵥ50 are determined by laser diffraction according to ISO 13320 using the Mie model, and
wherein for any combination of two powder coating components the ratio of the Dᵥ50 of one of the powder components to the Dᵥ50 of the other one of the powder coating components is in the range of from 0.8 to 1.2.

2. A powder coating composition according to claim 1 comprising powder coating components A and B in a weight ratio in the range of from 30:70 to 70:30, preferably of from 35:65 to 65:35.

3. A powder coating composition according to claims 1 or 2, wherein the powder coating composition is a two-component powder coating composition free of any further powder coating component.

4. A powder coating composition according to any one of the preceding claims, wherein powder coating component A comprises part of the curing resin and is free of the one or more curing additives and powder coating component B comprises part of the curable resin and at least one of the one or more curing additives.

5. A powder coating composition according to any one of claims 1 to 3, wherein the one or more curing additives comprise a curing agent that is a resin, and wherein
powder coating component A comprises the curable resin and is free of the curing agent that is a resin, and
powder coating component B comprises the curing agent that is a resin and is free of the curable resin.

6. A powder coating composition according to any one of the preceding claims, wherein the curable resin is a carboxyl-functional polyester and the one or more curing additives comprise a crosslinking curing agent, preferably a β-hydroxyalkylamide or a polyisocyanate, preferably triglycidyl isocyanurate.

7. A powder coating composition according to any one of the preceding claims, wherein the curing system is capable of curing at a temperature below 160 °C, preferably below 140 °C, and wherein each of the powder coating components A and B and any further powder coating component is not capable of curing at a temperature below 160 °C by itself.

8. A powder coating composition according to any one of the preceding claims, wherein inorganic component i) is aluminium oxide, and the weight ratio of inorganic components i) and ii) in dry-blended inorganic particulate additive C is in the range of from 10:90 to 60:40, and dry-blended inorganic particulate additive C comprises in the range of from 10 to 95 wt% of inorganic component iii).

9. A powder coating composition according to any one of the preceding claims, wherein each of the powder coating components A and B and any further powder coating component have a particle size distribution such that Dᵥ90 is at most 25 µm and Dᵥ50 is at most 12 µm.

10. A powder coating composition according to claim 9, wherein the powder coating composition comprises in the range of from 5.0 to 25 wt% of dry-blended inorganic particulate additive C, preferably of from 8.0 to 20 wt%, and wherein dry-blended inorganic particulate additive C comprises in the range of from 50 to 99 wt% of inorganic component iii), preferably of from 60 to 95 wt%.

11. A powder coating composition according to any one of claims 1 to 9, wherein the powder coating composition comprises in the range of from 0.1 to 3.0 wt% of the dry-blended inorganic particulate additive C, more preferably of from 0.2 to 2.0 wt%.

12. A powder coating composition according to any one of the preceding claims, comprising a further dry-blended inorganic particulate additive D, wherein the further dry-blended inorganic particulate additive D consists of or comprises inorganic pigment with a metallic effect, inorganic color pigment, biocidal pigment, anticorrosive pigment, extender, opacifying pigment, conductive or anti-static pigment, infrared-absorbing pigment, radiation shielding pigment, glass flake, or a combination of two or more thereof.

13. A powder coating composition according to claim 12, wherein the further dry-blended inorganic particulate additive D comprises an inorganic pigment with a metallic effect or is an inorganic pigment with a metallic effect, preferably is an inorganic pigment with a metallic effect.

14. A substrate coated with a powder coating composition according to any one of the preceding claims.
